Europäisches Patentamt

European Patent Office

Office européen des brevets

(11) Publication number: **0 464 809 A1**

# EUROPEAN PATENT APPLICATION

(21) Application number: **91111071.6**

(22) Date of filing: **04.07.91**

(51) Int. Cl.⁵: **A01D 34/00,** A01G 1/12, E01H 1/05

(30) Priority: **05.07.90 ES 9001846**

(43) Date of publication of application:
**08.01.92 Bulletin 92/02**

(84) Designated Contracting States:
**AT BE CH DE DK FR GB GR IT LI LU NL SE**

(71) Applicant: **Rodenas Olivares, Ignacio**
**Riera de Horta 14-18**
**Barcelona(ES)**

(72) Inventor: **Rodenas Olivares, Ignacio**
**Riera de Horta 14-18**
**Barcelona(ES)**

(74) Representative: **Blumbach Weser Bergen**
**Kramer Zwirner Hoffmann Patentanwälte**
**Radeckestrasse 43**
**W-8000 München 60(DE)**

(54) **Lawnmower-sweeper.**

(57) The present invention relates to a lawnmower device incorporating a rubbish collecting system made up with a broom-cylinder (2) and optionally two rotating brooms (3) arranged one at each side of the cylinder and advanced thereon, the rotating motion of the cylinder is caused by the device front wheels (8/1). The system also comprises a collecting container (4) receiving the collected rubbish, provided with a front gate (1) and two rear ones (5) operated from the control knob (9), the combined opening and closing of the gates causing a strong air current flowing the rubbish from the collecting container to the device's general container (6) located at the rear side.

FIG. 2

The present invention relates to a lawnmower device with the particular feature of being additionally a sweeper as the device is incorporating a mechanical system providing this operation, the rubbish collected being then delivered to a container wherein the rubbish is stored.

In the present state of the technique,these devices operating with such a double function are not really known so the present invention is a full industrial novelty because is providing some features and advantages which are completely obvious when the device's own operating peculiarities are followed up.

The rubbish collecting system is essentially made up with a broom-cylinder,optionally aided by two rotating brooms getting the rubbish to be driven into a collecting container also incorporated to this device, wherein the rubbish remains stored.

When this collecting container is full with the collected rubbish,respective gates located at the collecting container are opened and closed,this action affording a strong air current which make the rubbish to be flown into the general container located at the rear side of the device.

This machine complies with the low voltage and acoustic level standards of every version since the device can be manufactured fitted with an electrical motor or an internal combustion engine and with different sizes and be manually or self-propelled driven.

Description of the object of the present invention will be illustrated with a drawing sheet wherein has been represented a preferred example of a non-exhaustive embodiment only given by way of explanation and therefore susceptible to be modified in all those peculiarities which do not vary the present invention's own characteristical essentiality.

In the drawing:

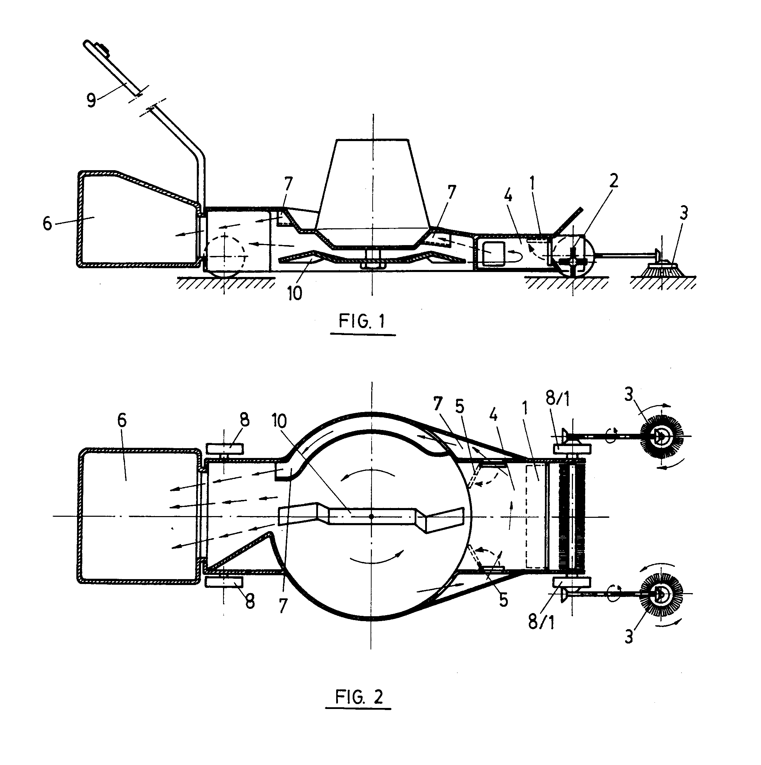

Figure 1 is a side elevation and whole view of a sweeper-lawnmower device,according to the features of the present invention.

Figure 2 shows the same device of previous figure 1 in a top plan view.

Referring now definitely to the typical embodiment shown,with numerical references therein set up to designate the different parts making up the device,the present invention's sweeper-lawnmower device is provided with a rubbish collecting system made up with a broom-cylinder -2-which has a rotating motion caused by the running action of the device's two front wheels -8/1- connected to said broom-cylinder through a multiplicating gear providing its rotating motion therefore at a speed suitable to the function being performed.

The broom-cylinder -2- is optionally aided in its operation by two rotating brooms-3- located one at each side of the cylinder opposite thereof. The broom-cylinder is in turn engaged to the front side of a collecting container -4-incorporated to the device into the inside of which the collected rubbish is pushed.

The collecting container -4- is provided with a front gate-1- and two rear ones-5-,the first one for adjusting the rubbish access to the collecting container and the second ones to provide easy passage of the rubbish to the container-6-wherein it remains stored.

Gates-5- and -1- are operated from the control knob-9-while the lawnmower blade -10- is working,this action causing a strong air current making the collected rubbish to be flown from the collecting container -4- to the general container-6- by means of a conduit-7- incorporated for this purpose.

Already disclosed with detail the present invention's mechanical peculiarities,the operation of the rubbish collecting system is as follows:

When the sweeper-lawnmower is running ahead,the gate-1-remains opened to give way to the dust papers and other rubbish and by means of the broom-cylinder -2- aided by the rotating brooms -3- the rubbish is driven into a collecting container-4-, the two gates-5- being kept closed in the processing stage.

When the collecting container -4- is full of collected rubbish,gate-1- can be closed and the two gates-5- opened from the control knob -9- while the lawnmower blade -10- is operating,this action giving way to a strong air current which will make the collected rubbish to be flown through the conduit -7- from the collecting container -4- to the container-6- wherein the rubbish will remain stored.

## Claims

1. Sweeper-lawnmower,characterized in that it comprises a conventional lawnmower with the incorporation of a rubbish collecting device which is being made based on a broom-cylinder provided with a rotating motion caused by the running action of the two front lawnmower wheels connected to said broom-cylinder through a multiplicating gear making easy the rotating motion to a speed suitable to the function to be performed.

2. Sweeper-lawnmower,as claim 1, characterized in that two optional rotating brooms located one at each side of the broom-cylinder with an advancing position thereof cooperating and supplementing the rubbish collecting work performed are provided.

3. Sweeper-lawnmower as claims 1 and 2,characterized in that the broom-cylinder is engaged at the front side of a collecting container also incorporated to the unit and the collected rubbish going into to remain provisionally stored therein.

4. Sweeper-lawnmower as claims 1 to 3 characterized in that the collecting container is provided with a front gate and two rear ones,the first gate remaining opened while the rubbish is collected and closed when the collecting container is full and the second gates are open to give easy access to the rubbish from the collecting container going to the general container,this action caused through a conduit arranged for this purpose because with the opening of said gates, a strong air current is caused that sweeps away the rubbish.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | GB-A-941 788 (RENTON)<br>* the whole document *<br>– – – | 1,2 | A 01 D 34/00<br>A 01 G 1/12<br>E 01 H 1/05 |
| Y | FR-A-2 627 788 (SALA GABARRO ET AL.)<br>* figures 1, 4 *<br>– – – | 2 | |
| A | EP-A-0 060 406 (WOLF-GERÄTE)<br>* claim 1; figure *<br>– – – | 3,4 | |
| A | GB-A-433 255 (DRONSFIELD BROTHERS ET AL.)<br>– – – | | |
| A | EP-A-0 368 021 (AMAZONEN-WERKE)<br>– – – – – | | |

TECHNICAL FIELDS
SEARCHED (Int. Cl.5)

A 01 D
A 01 G
E 01 H

The present search report has been drawn up for all claims

| Place of search | Date of completion of search | Examiner |
|---|---|---|
| Berlin | 30 September 91 | MERCKX A M |